# FASCICULE DE BREVET EUROPEEN

(11) **EP 3 324 093 B1**
(45) Date de publication et mention de la délivrance du brevet: **07.08.2019**
(21) Numéro de dépôt: 16199887.7
(22) Date de dépôt: 21.11.2016
(51) Int. Cl.: F16L 58/18, F16L 41/08, F16L 47/28, E03F 3/04, E03F 5/02

(54) **BRIDE D ADAPTATION POUR PIQUAGE SUR CANALISATION**
ANPASSFLANSCH FÜR VERBINDUNGSANSCHLUSS VON ROHRLEITUNGEN
ADAPTER FLANGE FOR PIPE TAPPING

(43) Date de publication de la demande: 23.05.2018
(73) Titulaire: Norham, 26260 Saint-Donat-sur-l'Herbasse (FR)
(72) Inventeur: PALLY, Sébastien, 26750 Geyssans (FR); LAMBERTON, Mikaël, 26260 Arthemonay (FR); NOGUES, Sacha, 26270 Mirmande (FR); MICHEL, François, 26260 Saint Donat (FR)
(74) Mandataire: Talbot, Alexandre

(56) Documents cités:
- EP-A2- 2 354 619
- WO-A2-2010/016708
- DE-A1- 19 927 591
- JP-A- 2013 133 917
- KR-A- 20080 043 423
- US-A- 6 089 615

## Description

### Domaine technique de l'invention

L'invention est relative à une bride d'adaptation destinée être raccordée à une canalisation muni d'un orifice traversant.

### État de la technique

Il est courant de raccorder une canalisation secondaire à une canalisation principale qui est déjà présente et en fonctionnement. Afin de raccorder la canalisation secondaire, la canalisation principale est mise à nu, c'est-à-dire que le sol est creusé afin d'accéder à la paroi externe de la canalisation principale.

Un orifice traversant est réalisé dans la canalisation principale et une bride d'adaptation est installée afin de relier les deux canalisations et autoriser un passage des effluents. La bride d'adaptation assure l'étanchéité entre l'intérieur des canalisations et l'extérieur.

De manière classique, la bride d'installation est posée sur la paroi externe de la canalisation. Des colliers de serrage sont installés et font le tour de la canalisation de manière à plaquer la bride d'adaptation contre la paroi externe de la canalisation et ainsi assurer l'étanchéité de la connexion.

Cette solution technique est particulièrement compliquée à mettre en oeuvre et longue à effectuer car elle nécessite de libérer toute la circonférence du tuyau formant la canalisation afin de pouvoir installer les colliers de serrage.

Un travail préalable de nettoyage méticuleux de la surface externe du tuyau doit être réalisé afin d'assurer une bonne étanchéité entre le tuyau et la bride d'adaptation. Ce travail de nettoyage permet d'assurer une parfaite connexion entre la bride d'adaptation et la paroi externe du tuyau.

Lorsque la surface externe du tuyau n'est pas assez lisse, il est nécessaire de réaliser un regard ou boite de branchement en béton ce qui rend l'opération de raccordement encore plus longue et onéreuse car un tronçonnage de la canalisation est nécessaire.

Pour éviter l'utilisation des colliers de serrage autour du tuyau, il est également connu d'utiliser des brides d'adaptation qui s'enfoncent à l'intérieur d'un trou circulaire présent dans la canalisation. Ces brides d'adaptation circulaires comprennent un élément interne qui prend appui sur la paroi interne du tuyau. Dans cette configuration, l'élément interne possède une section filetée qui déborde à la surface du tuyau.

La bride d'adaptation possède, en plus, un élément externe qui est muni d'un joint. Le joint de l'élément externe est déposé sur la paroi externe du tuyau et une vis coopère avec la partie filetée de l'élément interne afin de plaquer le joint de l'élément externe contre la paroi externe et assurer l'étanchéité de la bride. Là encore, un nettoyage minutieux de la surface externe du tuyau est nécessaire pour assurer un bonne étanchéité.

Ce mode de réalisation est exclusivement utilisé sur les tuyaux de faibles diamètres en matériau polymère. En effet, de nombreuses contraintes existent pour s'insérer dans la canalisation tout en prenant appui contre la paroi interne du tuyau. L'orifice de la canalisation et l'élément interne présentent tous les deux une section circulaire qui doivent être quasiment parfaites. L'élément interne présente un diamètre très légèrement supérieur au diamètre du trou présent dans le tuyau. L'élément interne est réalisé en matériau polymère et il est configuré pour pouvoir se déformer en appuyant sur les deux côtés opposés d'un diamètre. Cette légère différence de diamètre permet à l'élément interne de pouvoir s'insérer dans le trou en profitant de la déformation élastique de l'élément interne tout en assurant un bon maintien mécanique lorsque la bride est installée.

Il apparait évident que ce mode de réalisation, n'est pas utilisable dans de très nombreuses configurations. Par exemple, lorsque le trou présente un diamètre important, il est difficile voire impossible de réaliser un trou parfaitement circulaire car ce dernier provient généralement d'une scie cloche. La forme du trou étant moins précise, le maintien mécanique est incertain. Cette configuration est également compliquée à mettre en oeuvre car il est nécessaire de réaliser un élément interne qui doit être suffisamment déformable pour s'insérer dans le trou du tuyau tout en étant suffisamment rigide pour ne pas se déformer lorsque la bride d'adaptation sera mise sous tension pour assurer l'étanchéité de la connexion.

Une telle configuration n'est pas adaptée au domaine des travaux publics car les interventions sont effectuées dans toutes les conditions ce qui rend très compliqué la réalisation d'un trou de section circulaire avec un diamètre parfaitement défini. Il existe également un aléa sur la qualité de la paroi externe du tuyau. JP 2013 133917A dévoile une bride d'adaptation sur une canalisation munie d'un orifice traversant de l'art antérieur.

### Objet de l'invention

L'objet de l'invention consiste à remédier à ces inconvénients, et à proposer une bride d'adaptation, selon les caractéristiques techniques de la revendication 1, qui puisse à la fois permettre une bonne étanchéité tout en facilitant sa mise en place. On tend à atteindre un tel résultat au moyen d'une bride d'adaptation selon les revendications annexées.

L'invention a également pour objet un dispositif de circulation d'effluents selon les caractéristiques techniques de la revendication 11, qui facilite la connexion/déconnexion de canalisations secondaires et/ou l'obturation d'une canalisation. On tend à atteindre ce résultat au moyen d'un dispositif de circulation d'effluents selon les revendications annexées.

L'invention a encore pour objet un procédé d'installation d'une bride d'adaptation à une canalisation selon les caractéristiques techniques de la revendication 13, qui soit facile à mettre en oeuvre. On tend à obtenir un tel résultat au moyen des revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 illustre, de façon schématique, une vue en coupe d'une bride selon l'invention,
- la figure 2 illustre, de façon schématique, une vue en coupe d'une armature selon l'invention lorsqu'elle est pliée,
- la figure 3 illustre, de façon schématique, une vue en perspective d'une armature lorsqu'elle est pliée,
- la figure 4 illustre, de façon schématique, une vue en coupe d'un joint,
- la figure 5 illustre de façon schématique une vue en perspective d'un dispositif de fixation,
- la figure 6 illustre, de façon schématique, une vue en perspective de l'installation d'une armature dans un orifice d'une canalisation.

### Description détaillée

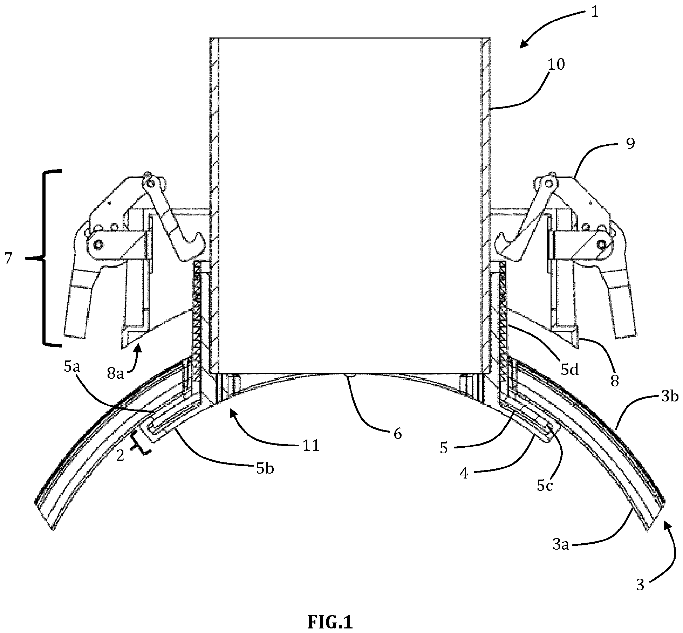

Comme illustré à la figure 1, la bride d'adaptation 1 comporte un premier élément interne 2 également appelé selle interne. Le premier élément interne 2 est configuré pour venir en contact avec la paroi interne 3a d'une canalisation 3. La canalisation 3 est formée par un premier tuyau. La canalisation 3 comporte un orifice traversant qui définit une section de passage entre l'intérieur de la canalisation 3 et l'extérieur de la canalisation 3, par exemple pour connecter un second tuyau (non représenté). L'orifice traversant également appelé piquage peut définir une forme quelconque dans la paroi de la canalisation 3. Cependant, il est avantageux de prévoir que l'orifice définit une section circulaire.

Contrairement aux modes de réalisation de l'art antérieur, la bride d'adaptation 1 est configurée pour assurer l'étanchéité au moyen de la paroi interne 3a de la canalisation 3 et non à partir de la paroi externe 3b de la canalisation 3. Un joint 4 est mis en contact de la paroi interne 3a de la canalisation 3. Cette configuration est particulièrement avantageuse car elle permet de s'affranchir de l'état de surface de la paroi externe 3b du tuyau 3 ainsi que d'une étape de nettoyage de la paroi externe 3b.

Un tel mode de réalisation est particulièrement avantageux lorsque le tuyau 3 est un tuyau annelé car cela permet de s'affranchir de la texturation qui est présente à la surface externe du tuyau. Ce mode de réalisation permet d'utiliser une bride d'adaptation 1 sans s'inquiéter de la configuration précise du tuyau annelé à l'exception de son diamètre nominal interne. En effet, les configurations des tuyaux annelés sont particulièrement hétérogènes dans l'espacement des annelures, dans la largeur des annelures ainsi que dans la hauteur des annelures. L'utilisation d'un joint externe est très difficile à mettre en oeuvre car une empreinte des annelures doit être réalisée après la formation de l'orifice traversant pour former le joint adapté.

Ce mode de réalisation est également plus avantageux qu'une configuration où l'étanchéité est réalisée au moyen d'un joint 4 disposé sur la paroi latérale du tuyau 3. En effet, dans le cas d'un joint 4 s'appuyant sur la paroi latérale, il est nécessaire de maitriser parfaitement le diamètre du trou qui reçoit la bride d'adaptation ainsi que le diamètre de la bride d'adaptation afin de s'adapter à l'épaisseur du joint 4. Cette configuration est particulièrement difficile à mettre en oeuvre. Il est encore possible de former le joint 4 après l'installation de la bride d'adaptation 1, mais cela suppose de couper la circulation des effluents durant l'installation de la bride et durant le temps de séchage du joint 4 ce qui peut durer un long moment.

Le premier élément interne 2 de la bride d'adaptation 1 comporte une armature 5 qui fournit la rigidité recherchée du premier élément interne 2. Le joint 4 est disposé entre l'armature 5 et la paroi interne 3a de la canalisation 3.

L'armature 5 est réalisée dans un premier matériau qui est avantageusement un métal, un matériau polymère et/ou un matériau composite à matrice polymère. L'armature 5 est avantageusement réalisée dans des matériaux choisis parmi les matériaux polyester renforcés par de la fibre de verre, du polyamide, du polyéthylène haute densité, du polypropylène. L'armature 5 est réalisée dans un matériau possédant un module de Young supérieur à celui du matériau formant le joint 4. L'armature 5 est réalisée dans un matériau rigide ce qui permet de réduire la déformation de l'élément interne 2 lorsque ce dernier est mis sous contrainte afin d'assurer l'étanchéité de la bride d'adaptation 1. Cette configuration empêche l'insertion du premier élément interne 2 par déformation comme dans l'art antérieur.

L'armature 5 possède une première face 5a incurvée configurée pour venir en contact mécanique avec la paroi interne 3a de la canalisation 3. La première face incurvée est configurée pour s'adapter à la courbure interne du tuyau 3. L'armature 5 possède une deuxième face 5b opposée à la première face 5a et au moins une paroi latérale 5c reliant la première face 5a avec la deuxième face 5b. La deuxième face 5b peut être incurvée, droite ou quelconque. Il est particulièrement avantageux de prévoir une deuxième face incurvée 5b afin de ne pas trop perturber la circulation des effluents. La première face 5a est dirigée vers la paroi interne 3a de la canalisation 3 alors que la deuxième face 5b est dirigée vers le centre de la canalisation 3.

Le premier élément interne 2 et avantageusement son armature 5 comportent une zone de déformation 6 configurée pour autoriser un basculement du premier élément interne 2 entre une première position où le premier élément interne 2 présente une première section supérieure à la section de passage et une deuxième position où le premier élément interne 2 présente une deuxième section inférieure à la section de passage. Lorsque le premier élément interne 2 se trouve dans sa première position, le premier élément interne 2 est incapable de s'insérer à l'intérieur de la canalisation 3. Lorsque le premier élément interne 2 est inséré à l'intérieur de la canalisation 3 et lorsqu'il se trouve dans sa première position, le premier élément interne 2 est incapable de s'extraire de la canalisation 3.

En revanche, le premier élément interne 2 peut s'introduire et s'extraire facilement de la canalisation 3 lorsque le premier élément interne 2 se trouve dans sa deuxième position. Cette configuration permet une installation et un démontage aisés de la bride d'adaptation à travers l'orifice interne.

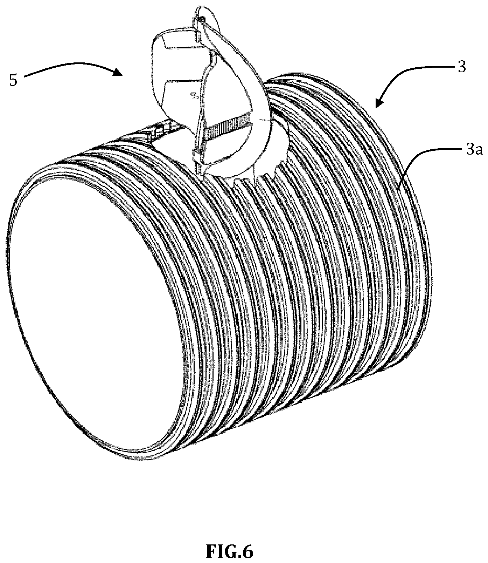

La figure 1 montre clairement que la bride d'adaptation présente, dans le plan de coupe, des dimensions supérieures à la plus grande dimension de l'orifice de passage dans sa première position. La figure 6 montre un mode de réalisation particulier dans lequel, l'armature 5 est pliée dans sa deuxième position afin de pouvoir être insérée ou extraite à travers l'orifice de passage.

Dans l'exemple illustré à la figure 6, l'armature 5 est dépourvue de joint 4 pour mieux montrer la déformation de l'armature 5.

Lorsque l'orifice de passage et la bride d'adaptation 1 possèdent tous les deux une forme circulaire, la déformation du premier élément interne 2 est configurée pour que la dimension représentative du diamètre du cercle formé par le premier élément interne 2 varie entre une première position où le diamètre du première élément interne 2 est supérieur au diamètre du trou et une deuxième position où le diamètre du première élément interne 2 est inférieur au diamètre du trou.

En autorisant la déformation du premier élément interne 2, il est alors possible de prévoir une surface de recouvrement plus importante contre la paroi interne de la canalisation 3 tout autour de l'orifice traversant. La tenue mécanique est améliorée et il est possible d'utiliser plus efficacement un joint 4 qui assure l'étanchéité par l'intérieur de la canalisation 3.

L'élément interne 2 de la bride d'adaptation 1 comporte un joint 4 réalisé dans un deuxième matériau différent du premier matériau formant l'armature 5. De manière avantageuse, le deuxième matériau est plus flexible que le premier matériau de manière à réaliser un joint 4 plus efficace. Le joint 4 est configuré pour recouvrir partiellement ou au moins partiellement la première face 5a de l'armature 5. Le joint 4 est agencé pour venir en contact de la paroi interne 3a de la canalisation 3 et entourer continument l'orifice traversant. Le joint 4 recouvre continument la paroi latérale 5c et la deuxième face 5b de l'armature 5 de manière à séparer l'armature 5 d'un effluent circulant dans la canalisation 3. Cette configuration avec un joint 4 qui empêche le contact entre l'effluent et l'armature 5 permet de libérer des contraintes de réalisation sur l'armature 5 afin de pouvoir déformer l'armature 5 sans se préoccuper de son étanchéité. L'étanchéité de la bride d'adaptation est assurée au moyen du joint 4 qui vient sur plaquer sur la paroi interne lisse de la canalisation. Cela permet également de réaliser une armature 5 possédant des orifices afin de pouvoir limiter le poids de la bride d'adaptation1. Cette configuration permet encore une plus grande liberté dans les matériaux formant l'armature 5 car ces derniers ne sont pas en contact avec les effluents.

La surface de contact entre le joint 4 et la paroi 3a entoure le trou traversant, de sorte à éviter toute fuite à l'interface entre la bride d'adaptation 1 et la canalisation 3. Il est par exemple possible que le trou traversant soit de forme carrée et que la surface de contact soit circulaire. Cette différence de forme entre le trou et l'armature 5 est possible car l'armature 5 peut se déformer de manière à avoir une section plus faible que la section du trou traversant lors de son insertion.

Cette configuration permet également une plus grande liberté dans la section du trou traversant en comparaison de la section de l'armature 5. Il est donc possible de réaliser un trou traversant dans la canalisation 3 par toute technique adaptée et notamment sans utiliser de scie à cloche.

Il est particulièrement avantageux de dissocier l'armature 5 et le joint 4 de manière à mieux maitriser la déformation de l'armature 5 pour déformer le premier élément interne 2. Le joint 4 suit la déformation de l'armature 5 et il n'assure aucune tenue mécanique ce qui offre une plus grande liberté de réalisation.

Cette solution avec installation du joint 4 contre la paroi interne 3a est particulièrement avantageuse. Une augmentation de la pression à l'intérieur de la canalisation 3 va se traduire par une augmentation de la pression contre le premier élément interne 2 ce qui peut avoir tendance à plaquer le joint 4 contre la paroi interne 3a de la canalisation 3 avec une pression plus forte. Cette augmentation de pression dans la canalisation 3 ne va pas induire des risques de fuite et elle peut même améliorer les performances d'étanchéité lors des augmentations de pression dans le tuyau 3.

La bride d'adaptation 1 comporte également des moyens de fixation 7 configurés pour fixer le premier élément interne 2 sur la paroi externe 3b de la canalisation 3. De cette manière, le premier élément interne 2 est plaquée contre la paroi interne 3a de la canalisation 3 et le joint 4 est en contact direct avec la paroi interne 3a de la canalisation 3 de manière à assurer l'étanchéité de la bride d'adaptation 1.

La surface de contact du premier élément interne 2 avec la paroi interne 3a est avantageusement formée exclusivement par le joint 4.

Les moyens de fixation 7 peuvent comporter des moyens de fixation temporaires et/ou des moyens de fixation permanents. Il est également possible d'utiliser des moyens de fixation appliquant une faible pression sur le joint 4 en association ou indépendamment de moyens de fixation appliquant une forte pression sur le joint 4.

Dans un mode de réalisation particulièrement avantageux, les moyens de fixation 7 du premier élément interne 2 avec la paroi externe 3b de la canalisation 3 comportent un deuxième élément externe 8 configuré pour venir en contact avec la paroi externe 3b de la canalisation 3 et un système de serrage 9 configuré pour lier mécaniquement l'armature 5 avec la deuxième pièce externe 8.

Le deuxième élément externe 8 est avantageusement configuré pour présenter une première surface 8a reproduisant la surface externe 3b de la canalisation 3. Dans le cas d'un tuyau à section circulaire, la première surface 8a est incurvée pour venir épouser la forme de la paroi externe 3b de la canalisation 3. De manière avantageuse, le deuxième élément externe 8 vient en contact avec la paroi externe 3b tout autour de l'orifice traversant. Le deuxième élément externe 8 permet d'augmenter la surface de contact de la bride d'adaptation 1 avec la paroi externe 3b de la canalisation 3 de manière à réduire la pression appliquée sur la paroi externe 3b de la canalisation 3. Ce mode de réalisation est particulièrement avantageux pour éviter de détériorer la paroi externe 3b de la canalisation 3 ce qui peut arriver lors d'un contact ponctuel.

Une telle configuration est particulièrement avantageuse lorsque la canalisation 3 est réalisée par un tuyau annelé car les annelures sont très souvent creuses. Il est alors possible de plaquer le premier élément interne 2 contre la paroi 3a du tuyau 3 en prenant appui sur la paroi externe 3b du tuyau 3 sans craindre de fragiliser les annelures assurant la tenue mécanique du tuyau 3.

Il est particulièrement avantageux de prévoir que la forme du deuxième élément externe 8 soit identique à la forme du premier élément interne 2 de sorte que les zones de contact sur les parois de la canalisation soient en vis-à-vis afin de ne pas fragiliser la paroi de la canalisation 3.

Il est possible de réaliser le dispositif de serrage 9 par exemple au moyen d'une vis, un écrou, une tige filetée, un vérin, un dispositif à crémaillère ou tout autre connecteur configuré pour appliquer une contrainte entre le premier élément interne 2 et la paroi externe 3b.

Les moyens de fixation 7 sont configurés pour lier mécaniquement l'armature 5 avec la paroi externe 3b du tuyau 3. Les moyens de fixation 7 prennent appui sur l'armature 5 qui est réalisée dans un matériau rigide. Il est avantageux que les moyens de fixation prennent également appui sur le deuxième élément externe 8 pour réduire la contrainte appliquée sur la paroi externe 3b du tuyau 3.

Différents modes de réalisation sont possible pour former la zone de déformation 6. Il est particulièrement avantageux de prévoir que la zone de déformation 6 soit configurée pour autoriser le pliage du premier élément interne 2 et avantageusement le pliage de l'armature 5. Les inventeurs ont observé que le pliage du premier élément interne 2 permet de moduler rapidement et facilement la taille apparente du premier élément interne 2. Cette modulation par pliage peut être réalisée facilement par un utilisateur unique ce qui facilite l'utilisation de la bride d'adaptation 1 en comparaison du montage et du démontage de l'armature pour son insertion dans la canalisation 3.

En alternative, la déformation de l'armature 5 se fait au moyen d'une translation des éléments constitutifs de l'armature 5 et/ou du premier élément interne 2. Cependant, un tel mode de réalisation est plus compliqué et plus onéreux à mettre en oeuvre. De manière avantageuse, la déformation par pliage est réalisée par une rotation selon un seul axe de rotation.

Il est particulièrement avantageux de prévoir que l'armature 5 est montée ou pré-montée avant d'être insérée dans la canalisation 3 ce qui permet de réduire le temps d'installation et réduire les risques de mauvais montage.

Il est particulièrement avantageux de prévoir que la déformation du premier élément interne 2 soit une déformation élastique et non une déformation plastique afin que la forme du premier élément interne 2 soit mieux maitrisée. Cela permet également le démontage et la réutilisation de la bride d'adaptation 1.

Il est également avantageux de prévoir que la déformation du premier élément interne 2 se traduise par une déformation de l'armature 5. Dans une telle configuration, l'armature 5 fait le tour du trou traversant ce qui permet d'assurer une meilleure tenue mécanique du premier élément interne 2 tout autour du trou traversant et un bon serrage du joint 4.

Dans un mode de réalisation particulier, l'armature 5 est formée par au moins deux pièces distinctes. La connexion entre ces deux pièces distinctes forme la zone de déformation. Les deux pièces distinctes sont maintenues ensemble mécaniquement au moyen d'un matériau élastique, par exemple le joint 4. En d'autres termes, l'armature 5 de déforme facilement au moyen de sa zone de déformation et le joint 4 est utilisé pour raidir la zone de déformation 6. En déformant, le matériau élastique, il est possible de déformer l'armature 5. En alternative, la raideur de la zone de déformation 6 est formée par l'armature 5, et la composante de la raideur provenant du joint 4 est faible. Par raideur, il faut comprendre le rapport entre l'effort appliqué pour déformer la pièce et la valeur de déformation obtenue. L'armature 5 peut être formée par plus de deux pièces.

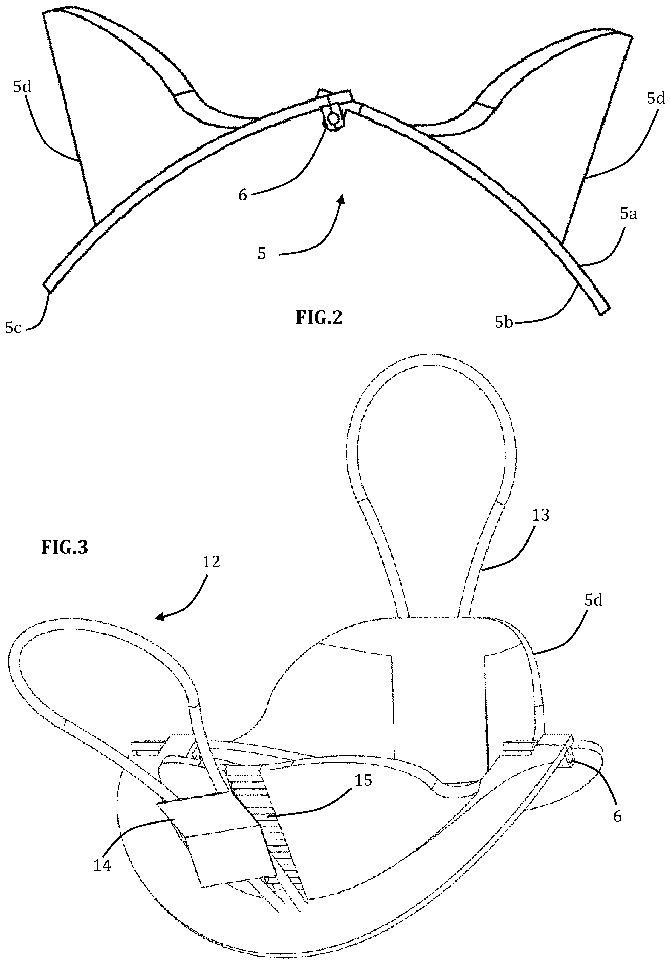

Dans l'exemple de réalisation illustré aux figures 2 et 3, l'armature 5 est formée par deux pièces qui sont liées mécaniquement au moyen d'une liaison pivot de manière à autoriser le pliage de l'armature. La liaison pivot forme la zone de déformation 6. Au moins une des pièces formant l'armature 5 comporte une butée qui coopère avec l'autre pièce de manière à empêcher le pliage de l'armature 5 dans un sens et à autoriser le pliage dans l'autre sens lorsque l'armature 5 est dans la première position.

Différents modes de réalisation du premier élément interne 2 sont envisagés. Les éléments rigides formant l'armature 5 peuvent être installés séparément et une étape de surmoulage est réalisée afin de les lier mécaniquement. Dans la variante illustrée aux figures 2 et 3, les éléments rigides de l'armature 5 sont déjà liés mécaniquement et une étape de surmoulage permet de former un ressort élastique qui replace les éléments rigides dans une position prédéfinie qui correspond avantageusement à la première position du premier élément interne 2. Dans une autre variante, les éléments rigides de l'armature 5 sont déjà liés mécaniquement et un ressort élastique lie les éléments de l'armature. L'étape de surmoulage formant le ressort élastique est avantageusement l'étape de surmoulage formant le joint 4.

En alternative, un élément de support formant le joint 4 est fourni et il comporte une pluralité de cavités destinées à recevoir les éléments rigides de l'armature 5. Les éléments rigides formant l'armature 5 peuvent être montés séparément dans l'élément de support. En alternative, l'armature 5 est montée puis installée dans l'élément de support qui forme avantageusement un ressort élastique.

Les inventeurs ont également observé qu'il est particulièrement avantageux de prévoir que la zone de déformation 6 soit configurée pour autoriser un pliage de l'armature 5 de manière à réduire le rayon de courbure de la première face 5a. En effet, ce mode de réalisation permet de passer rapidement de la première position à la deuxième position et inversement ce qui facilite l'installation rapide de la bride d'adaptation 1. Ce point est particulièrement intéressant lorsque la bride d'adaptation 1 est installée par une seule personne. Dans cette configuration, la face 5b dirigée vers le centre de la canalisation 3 est avantageusement concave et les deux extrémités opposées de cette face 5b vont se rapprocher lors de la pliure et avantageusement revenir dans leur position initiale après la déformation.

Il est préférable de prévoir une armature 5 configurée pour interdire un pliage augmentant le rayon de courbure de la première face 5a lorsque l'armature 5 est dans la première position. En d'autres termes, l'armature 5 est configurée pour être pliée dans une seule direction. Les inventeurs ont observé qu'interdire la déformation selon l'autre direction est particulièrement avantageux car cela permet de réduire les risques de déformation du premier élément interne 2 lorsque ce dernier est plaqué contre la paroi interne 3a de la canalisation 3.

En effet, en autorisant la déformation selon les deux directions opposées, lorsque la bride d'adaptation 1 est trop serrée, il est possible d'avoir une légère déformation de l'armature 5 visant à l'éloigner de la paroi 3a de la canalisation 3 à certains endroits. Dans ce cas de figure, cela réduit la pression appliquée sur le joint 4 ce qui peut se traduire par une légère fuite. Ce phénomène intervient surtout lorsque le diamètre de la paroi interne 3a n'est plus circulaire et/ou lorsque que la bride d'adaptation 1 est trop serrée.

Selon les modes de réalisation, la bride d'adaptation 1 peut être utilisée pour obturer un orifice traversant ou pour permettre la connexion d'une canalisation secondaire sur une canalisation principale 3.

Dans le cas d'une obturation, le joint 4 est avantageusement configuré pour empêcher l'effluent circulant dans la canalisation 3 d'atteindre l'armature 5 et pour empêcher ce même effluent de sortir de la canalisation 3. Ce mode de réalisation est particulièrement avantageux car il ne condamne pas l'orifice débouchant ce qui permet sa réutilisation.

Pour l'installation d'une seconde canalisation également appelée canalisation secondaire (non représentée), il est particulièrement avantageux de prévoir que le joint 4 soit agencé pour définir un embout annulaire 10 de connexion d'une seconde canalisation 3. Dans un mode de réalisation préférentiel, le joint 4 passe à travers de l'orifice traversant, c'est-à-dire qu'il relie l'intérieur de la canalisation 3 avec l'extérieur de la canalisation 3. Ce surplus de matière permet un meilleur contact entre le joint 4 et la canalisation secondaire afin de réduire les risques de fuite.

Selon les modes de réalisation, la connexion entre le joint 4 et la canalisation secondaire peut se faire de manière interne ou externe. Dans un premier cas de figure, la canalisation secondaire entoure le joint 4 qui vient donc en contact de la paroi interne de la canalisation secondaire. Dans ce cas de figure, la paroi interne de la canalisation secondaire, vient en contact avec la paroi externe d'un embout annulaire.

En alternative, la canalisation secondaire est entourée par le joint 4 qui vient donc en contact de la paroi externe de la canalisation secondaire. Dans ce deuxième cas de figure, il est particulièrement avantageux de prévoir que le joint 4 définit un embout annulaire 10 qui présente une gorge 10a sur sa face externe. La gorge 10a est configurée pour coopérer avec un élément de serrage circonférentiel (non représenté). L'élément de serrage circonférentiel va permettre de serrer l'embout annulaire 10 autour de la canalisation secondaire pour assurer une bonne étanchéité. Il est particulièrement avantageux de prévoir que la canalisation secondaire s'introduise à l'intérieur de l'embout annulaire 10 car en cas de mauvaise installation et notamment d'une introduction trop profonde dans la bride d'adaptation 1, l'étanchéité est assurée et les risques de détérioration du joint sont réduits.

Cette configuration est particulièrement avantageuse car le joint 4 monobloc assure le contact avec la paroi 3a de la canalisation 3 et avec la canalisation secondaire ce qui évite les risques de fuite. Cette configuration permet également de déformer l'embout annulaire 10 afin de s'adapter à l'axe longitudinal de la canalisation secondaire si cette dernière est légèrement désaxée. De manière avantageuse, la bride est adaptée pour autoriser une connexion entre la canalisation principale et la canalisation secondaire avec un angle égal à 90° plus ou moins 10°.

Afin de limiter la déformation de l'embout annulaire 10, il est particulièrement avantageux de prévoir des éléments de renfort latéraux 5d qui font saillie de la canalisation 3 et qui entourent partiellement ou complètement l'embout annulaire 10. Ces éléments de renfort latéraux 5d vont empêcher l'embout annulaire 10 de dépasser des angulations seuils par rapport à l'axe longitudinal de la canalisation 3. Il est particulièrement avantageux de prévoir que les éléments de renfort latéraux 5d font partie de l'armature 5 afin d'assurer une bonne tenue mécanique. Les éléments de renfort latéraux 5d vont empêcher de trop déformer le joint 4.

Lorsque la canalisation secondaire est introduite dans l'embout annulaire 10, il est particulièrement avantageux de prévoir que l'embout annulaire 10 présente au moins une butée 11 disposée à l'intérieur de l'embout annulaire 10. La butée 11 est agencée en saillie dans la paroi interne de l'embout annulaire 10 afin de bloquer la progression de la canalisation secondaire au-delà d'une valeur seuil. La butée 11 est préférentiellement agencée de manière à éviter que la canalisation secondaire dépasse de l'armature 5 et vienne former un obstacle à la progression de l'effluent dans la canalisation 3 principale.

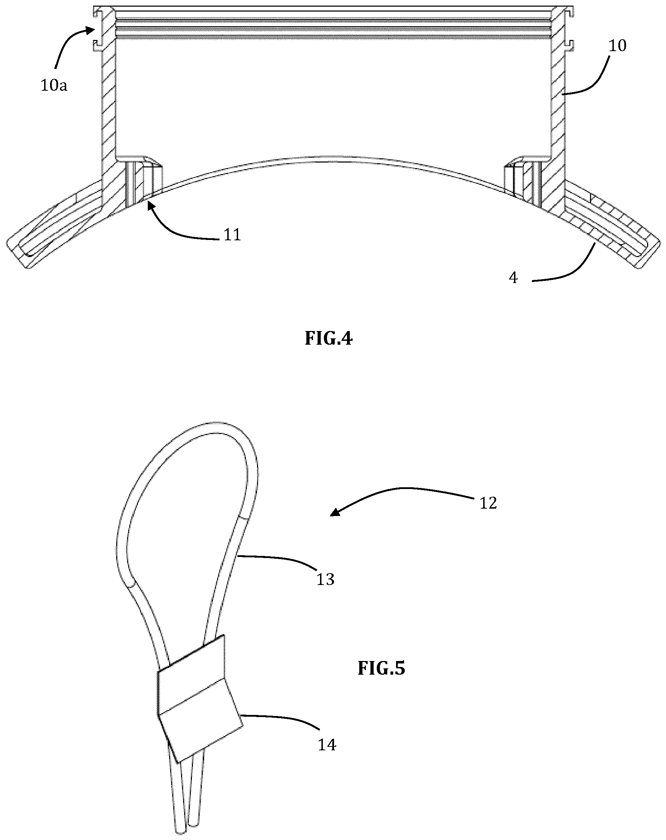

Comme indiqué plus haut, différents modes de réalisation sont envisageables pour former les moyens de fixation 7. Dans un mode de réalisation avantageux, les moyens de fixation 7 sont formés par un organe de maintien déformable 12 illustré à la figure 5. L'organe de maintien déformable applique une faible pression sur la joint 4 de manière à placer la bride d'adaptation 1 en position et limiter le fuites.

L'organe de maintien déformable 12 permet de placer le premier élément interne 2 contre la paroi interne 3a de la canalisation 3 en prenant appui sur la paroi externe 3b. L'organe de maintien déformable 12 est avantageusement configuré pour que le premier élément interne 2 puisse être déplacé afin de finaliser son positionnement par rapport à l'orifice traversant tout en étant au contact de la paroi interne 3a.

L'organe de maintien déformable 12 comporte un élément déformable 13 dont une extrémité est reliée au premier élément interne 2. Dans un mode de réalisation particulier, l'organe de maintien déformable 12 est fixé à l'armature 5.

Dans le mode de réalisation illustré à la figure 5, l'organe de maintien déformable 12 comporte un élément fixateur 14, par exemple un crochet, une plaquette ou un grappin qui est monté sur l'élément déformable 13. L'utilisateur déforme l'organe de maintien déformable 12 de manière à ce que l'élément fixateur 14 vienne en contact de la paroi externe 3b de la canalisation 3. Dans un mode de réalisation particulier, l'élément déformable 13 est configuré pour être déformable par traction de sorte que l'utilisateur tire sur l'élément déformable 13 afin d'écarter l'élément fixateur 14 de la deuxième face du premier élément interne 2 et venir en contact de la paroi externe 3b de la canalisation 3.

Une fois en contact avec la paroi interne 3a, le premier élément interne 2 est bloqué et ne peut pas sortir de la canalisation 3. L'utilisateur tire sur l'élément déformable 13 afin de mettre l'élément fixateur 14 en contact avec la paroi externe 3b de la canalisation 3. En tirant, sur l'élément déformable 13, l'utilisateur augmente la pression exercée par le premier élément interne 2 sur la paroi interne 3b ce qui permet de rendre la bride d'adaptation 1 étanche ou sensiblement étanche.

L'utilisation d'un élément déformable 13 permet d'adapter rapidement et simplement la distance entre l'élément fixateur 14 et le premier élément interne avec l'épaisseur de la canalisation 3.

Selon les modes de réalisation, l'élément déformable 13 est configuré pour être déformable élastiquement ou plastiquement. Une déformation élastique est avantageuse dans les épaisseurs conventionnelles des canalisations. Il est particulièrement avantageux d'utiliser un matériau élastomère pour former l'élément déformable. Préférentiellement, le matériau élastomère se présente sous la forme d'une corde, c'est-à-dire un élément longiligne qui peut présenter une section circulaire. L'élément fixateur 14 est préférentiellement réalisé en métal, en acier inoxydable, dans un matériau composite et avantageusement dans un matériau composite à matrice polymère.

Dans un mode de réalisation particulier non représenté, les moyens de fixation 7 du premier élément interne 2 avec la paroi externe 3b de la canalisation 3 sont exclusivement formés par l'organe de maintien déformable 12. Cette solution est simple à mettre en oeuvre pour une installation rapide de la bride d'adaptation 1. Cependant, afin de mieux maitriser la force de serrage et donc la contrainte appliquée sur le joint pour assurer l'étanchéité de la bride d'adaptation, il est particulièrement avantageux d'utiliser un système de serrage 9 et par exemple le système de serrage illustré à la figure 1.

Il est donc particulièrement avantageux de coupler l'organe de maintien déformable 12 avec un autre dispositif de serrage 9 qui permet d'appliquer une plus grande contrainte et/ou de mieux maintenir la contrainte sur une grande période de temps. Ces autres dispositifs de serrage 9 ont déjà été décrits plus haut.

Il est alors avantageux d'utiliser l'organe de maintien déformable 12 afin de placer le premier élément interne 2 en position contre la paroi interne de la canalisation 3. L'autre dispositif de serrage 9 est ensuite utilisé pour finaliser la fixation.

Dans une alternative de réalisation, l'élément fixateur 14 peut se déplacer le long d'une tige ou d'une corde afin d'adapter la distance entre l'élément fixateur 14 et l'armature 5 à l'épaisseur de la canalisation 3. Il est alors possible de régler plus facilement la contrainte sur le joint 4. Cependant, ce mode de réalisation est plus compliqué à utiliser car l'encombrement de la bride d'adaptation 1 peut être plus important.

Afin de faciliter l'installation de la bride d'adaptation 1, il est particulièrement avantageux d'utiliser au moins deux organes de maintien déformables 12. Lorsque le premier élément interne 2 présente une forme circulaire, il est avantageux de placer deux organes de maintien déformables 12 de manière diamétralement opposée.

Dans le mode de réalisation illustré à la figure 5, les deux organes de maintien déformables 12 définissent chacun une boucle. Les inventeurs ont observé que l'utilisation d'une boucle permet une préhension facilitée ainsi qu'un meilleur réglage de la position du premier élément interne 2. Cependant, d'autres formes sont possibles pour assurer la préhension de l'organe de maintien déformable 12. La boucle est avantageusement formée par les deux brins de l'élément déformable 13 fixé au premier élément interne 2.

Selon les modes de réalisation, l'organe de maintien déformable 12 peut posséder un ou plusieurs points de fixation au premier élément interne 2. Dans les modes de réalisation illustrés, deux points de fixation sont utilisés pour chaque organe de maintien déformable 12. De manière avantageuse, les deux points de fixation sont disposés à distance de la zone de déformation 6.

Dans un mode de réalisation particulier, les moyens de fixation 7 du premier élément interne 2 avec la paroi externe 3b de la canalisation 3 sont formés par des dispositifs à course variable entre une position d'installation et une position de serrage. De cette manière, l'utilisateur peut régler la course du dispositif de fixation afin d'adapter le serrage à l'épaisseur de la canalisation 3.

Cependant, les inventeurs ont observé que dans la majorité des cas, les contraintes appliquées sur le joint 4 sont nettement supérieures aux recommandations. Il est donc proposé d'utiliser un dispositif de serrage à course fixe 9 tel que celui représenté à la figure 1. De cette manière, la course de serrage va appliquer une contrainte de serrage mieux maitrisée sur le joint 4.

Afin de s'adapter aux différentes épaisseurs de la canalisation 3, il est particulièrement avantageux de prévoir que le dispositif de serrage à course fixe 9 est disposé sur la paroi externe de la canalisation 3 et qu'il coopère avec plusieurs éléments d'accrochage disposés sur le premier élément interne 2 et avantageusement sur l'armature 5. Ce mode de réalisation est plus avantageux car plus compact que la configuration opposée.

De manière préférentielle illustrée à la figure 3, le premier élément interne 2 possède plusieurs points d'accrochage matérialisés par une pluralité d'ergots 15 ou un dispositif à crémaillère.

Afin d'assurer une bonne fixation de la bride d'adaptation 1, il est particulièrement avantageux de prévoir que plusieurs dispositifs de serrage à course fixe 9 ou variable sont utilisés. De préférence, lorsque le premier élément interne 2 présente une forme circulaire, deux dispositifs de serrage sont disposés diamétralement opposés. Le dispositif de serrage illustré à la figure 1 peut être à course fixe ou à course variable.

Dans un mode de réalisation avantageux illustré à la figure 3, l'armature 5 possède au moins une pluralité d'ergots ou d'orifice 15 agencés selon un rayon de la première face incurvée, c'est-à-dire que les ergots ou orifices 15 sont disposés les uns à la suite des autres perpendiculairement à la première surface 5a. Ces ergots/orifices sont avantageusement disposés sur les éléments en saillies 5d.

De cette manière, le dispositif de serrage 9 va s'engager avec un des multiples ergots/orifices 15 en fonction de l'épaisseur de la canalisation 3. Ce mode de réalisation est particulièrement avantageux lorsque le dispositif de serrage 9 est à course fixe car la force de serrage est définie par la course prédéfinie ce qui permet de maitriser la contrainte sur le joint 4. Les autres paramètres liés à la canalisation 3 sont pris en compte par la position de l'ergot 15 qui coopère avec le dispositif de serrage 9. La course de serrage du dispositif de serrage et la capacité d'écrasement sont liées de manière à assurer la meilleure étanchéité. Ce mode de réalisation peut également être utilisé avec un dispositif de serrage à course variable. Une fois que le dispositif de serrage entre en contact avec un ergot ou un orifice, l'actionnement de la manette en rotation permet de tirer l'armature vers l'extérieur de la canalisation et bloquer le joint contre la paroi interne 3a.

Cette solution est particulièrement avantageuse car elle permet d'installer et de démonter une bride d'adaptation 1 sans outil à l'exception des moyens de formation de l'orifice traversant lorsque cela est nécessaire.

Dans un mode de réalisation particulier, les ergots 15 présentent une section triangulaire rectangle dans un plan de coupe comprenant un rayon de la première face incurvée 5a et avantageusement selon un diamètre d'une armature circulaire.

Grâce à la bride d'adaptation 1, il est possible d'obtenir rapidement un dispositif de circulation des effluents fonctionnel qui comporte une bride d'adaptation installée sur une canalisation 3 munie d'un orifice traversant. La bride d'adaptation 1 est montée contre la paroi interne de la canalisation 3 autour de l'orifice traversant pour assurer l'étanchéité. Selon les cas de figure, la bride 1 finalise l'étanchéité du tuyau qui a été percé ou pour lequel une canalisation secondaire a été enlevée. La bride d'adaptation 1 permet également d'installer une canalisation secondaire sur la canalisation principale.

Le procédé d'installation de la bride d'adaptation sur une canalisation 3 munie d'un orifice traversant peut être présenté de la manière suivante.

Une canalisation 3 munie d'un orifice traversant est fournie. Selon les modes de réalisation, l'orifice traversant est réalisé par l'utilisateur ou l'orifice traversant a déjà été réalisé précédemment.

La bride d'adaptation 1 est fournie. La bride 1 se trouve avantageusement dans la deuxième position afin de s'introduire à l'intérieur de la canalisation 3. Si la bride d'adaptation 1 est dans la première position, il est avantageux de la basculer dans la deuxième position.

La bride d'adaptation 1 est insérée dans la canalisation 3 à travers l'orifice traversant. Ensuite, la bride d'adaptation 1 est placée contre la paroi interne 3a de la canalisation 3 de sorte que le joint 4 entoure l'orifice traversant. La bride d'adaptation 1 se trouve dans à la première position.

Dans un premier mode de réalisation, la bride d'adaptation 1 se trouve dans la première position avant d'entrer en contact avec la paroi interne de la canalisation 3. En alternative, la bride d'adaptation 1 se trouve déjà en contact avec la paroi interne de la canalisation 3 lorsque la bride 1 bascule dans la première position.

Le premier élément interne 2 est fixé à la paroi externe de la canalisation 3 afin d'assurer l'étanchéité de la canalisation 3.

Comme indiqué précédemment, l'armature 5 est associée avantageusement à au moins un organe de maintien déformable 12. Il est alors intéressant de prévoir que le procédé d'installation comporte une étape de déformation de l'organe de maintien déformable 12 par traction de manière à ce que le crochet 14 de l'organe de maintien déformable 12 vienne en contact avec la paroi externe de la canalisation 3 et supporte le premier élément interne 2.

Il est encore avantageux de prévoir que le procédé d'installation de la bride d'adaptation 1 comporte, ensuite, le placement d'un deuxième élément externe 8 en contact avec la paroi externe 3b de la canalisation 3 et la fixation de l'armature 5 avec le deuxième élément externe 8 au moyen d'un connecteur liant mécaniquement l'armature 5 avec le deuxième élément externe 8.

Dans un mode de réalisation particulier, afin de pouvoir s'adapter à plusieurs diamètres différents de canalisation 3, la surface de contact de la première face du premier élément interne 2 comporte plusieurs zones dotées de rayons de courbure différents. De manière particulièrement avantageuse, ces différentes zones sont définies dans l'armature 5.

Plus précisément, la surface de contact 5a comporte :
- une première zone incurvée définie par un premier rayon de courbure de norme R1 constante et un premier vecteur normal contenu dans un premier plan,
- une deuxième zone incurvée définie par un deuxième rayon de courbure de norme R2 constante et un deuxième vecteur normal contenu dans un deuxième plan parallèle au premier plan, la norme R2 du deuxième rayon de courbure étant inférieure à la norme R1 premier rayon de courbure,
- une troisième zone incurvée définie par un troisième rayon de courbure de norme R3 constante et un troisième vecteur normal contenu dans un troisième plan parallèle au premier plan, la norme du troisième rayon de courbure R3 étant inférieure à la norme R1 du premier rayon de courbure, les premier, deuxième et troisième vecteurs normaux étant contenus dans un demi-espace délimité par la surface de contact 5a, la troisième zone étant séparée de la deuxième zone par la première zone.

En alternative, la différence de rayon de courbure peut être réalisée au moyen du joint qui comporte des épaisseurs différentes. Il est encore possible de combiner ces deux modes de réalisation.

Il est également avantageux de prévoir que le deuxième dispositif externe possède également plusieurs rayons de courbure tel que cela a été décrit pour l'armature. De cette manière, un même deuxième dispositif externe peut s'adapter à plusieurs canalisations ayant des diamètres externes différents.

## Revendications

1. Bride d'adaptation (1) sur une canalisation (3) munie d'un orifice traversant qui définit une section de passage, la bride d'adaptation (1) comportant :
- une première pièce interne (2) comportant :
• une armature (5) réalisée dans un premier matériau et possédant une première face (5a) incurvée configurée pour venir en contact mécanique avec une paroi interne (3a) de la canalisation (3), une deuxième face (5b) opposée à la première face (5a) et au moins une paroi latérale (5c) reliant la première face (5a) avec la deuxième face (5b), l'armature (5) comportant une zone de déformation (6) configurée pour autoriser un basculement de l'armature (5) entre une première position où la première pièce interne (2) présente une première section supérieure à la section de passage et une deuxième position où la première pièce interne (2) présente une première section inférieure à la section de passage,
• un joint (4) réalisé dans un deuxième matériau différent du premier matériau et recouvrant au moins partiellement la première face (5a) de l'armature (5) et agencé pour venir en contact de la paroi interne (3a) de la canalisation (3) et entourer continument l'orifice traversant, le joint (4) recouvrant continûment la paroi latérale (5c) et la deuxième face (5b) de l'armature (5) de manière à séparer l'armature (5) d'un effluent circulant dans la canalisation (3),
- des moyens de fixation (7) de la première pièce interne (2) avec la paroi externe (3b) de la canalisation (3).

2. Bride d'adaptation (1) selon la revendication 1, dans laquelle les moyens de fixation (7) de la première pièce interne (2) avec la paroi externe (3b) de la canalisation (3) comportent une deuxième pièce externe (8) configurée pour venir en contact avec la paroi externe (3b) de la canalisation (3) et un connecteur configuré pour lier mécaniquement l'armature (5) avec la deuxième pièce externe (8).

3. Bride d'adaptation (1) selon l'une des revendications 1 et 2, dans laquelle la zone de déformation (6) est configurée pour autoriser un pliage de l'armature (5).

4. Bride d'adaptation (1) selon la revendication précédente, dans laquelle la zone de déformation (6) est configurée pour autoriser un pliage de l'armature (5) de manière à réduire le rayon de courbure de la première face (5a).

5. Bride d'adaptation (1) selon la revendication précédente, dans laquelle l'armature (5) est configurée pour interdire un pliage augmentant le rayon de courbure de la première face (5a) lorsque l'armature (5) est dans la première position.

6. Bride d'adaptation (1) selon l'une quelconque des revendications précédentes, dans laquelle le joint (4) est agencé pour passer au travers de l'orifice traversant et définir un embout annulaire (10) d'une seconde canalisation.

7. Bride d'adaptation (1) selon la revendication précédente, dans laquelle l'embout annulaire (10) présente une gorge (10a) sur une face externe, la gorge (10a) étant configurée pour coopérer avec un élément de serrage circonférentiel.

8. Bride d'adaptation (1) selon l'une quelconque des revendications précédentes, dans laquelle l'armature (5) possède au moins un organe de maintien déformable (12) configuré pour venir en contact avec la paroi externe (3b) de la canalisation (3).

9. Bride d'adaptation (1) selon l'une quelconque des revendications précédentes, dans laquelle l'armature (5) possède au moins une pluralité d'ergots ou orifices (15) agencés selon un rayon de la première face (5a) incurvée et dans laquelle les moyens de fixation (7, 9) de la première pièce interne (2) avec la paroi externe (3b) de la canalisation (3) sont à course fixe.

10. Bride d'adaptation (1) selon la revendication précédente, dans laquelle les ergots (15) présentent une section triangulaire rectangle dans un plan de coupe comprenant un rayon de la première face (5a) incurvée.

11. Dispositif de circulation d'effluents comportant une bride d'adaptation (1) selon l'une quelconque des revendications précédentes et une canalisation (3) munie d'un orifice traversant, dans lequel la bride d'adaptation (1) est montée contre la paroi interne (3a) de la canalisation (3) autour de l'orifice traversant.

12. Dispositif de circulation d'effluents selon la revendication précédente dans lequel la canalisation (3) est un tuyau annelé.

13. Procédé d'installation d'une bride d'adaptation (1) à une canalisation (3) munie d'un orifice traversant, comprenant les étapes suivantes :
• fournir la canalisation (3) avec un orifice traversant,
• fournir une bride d'adaptation (1) selon l'une quelconque des revendications 1 à 10, la bride d'adaptation (1) se trouvant dans la deuxième position,
• insérer la bride d'adaptation (1) dans la canalisation (3) à travers l'orifice traversant,
• placer la bride d'adaptation (1) contre la paroi interne (3a) de la canalisation (3) de sorte que le joint (4) entoure l'orifice traversant, la bride d'adaptation (1) se trouvant dans la première position,
• fixer la bride d'adaptation (1) à la paroi externe de la canalisation (3).

14. Procédé d'installation d'une bride d'adaptation (1) selon la revendication précédente dans lequel au moins un organe de maintien déformable (12) est fixé à l'armature (5) et **caractérisé en ce qu'**il comporte une étape de déformation de l'organe de maintien déformable (12) par traction de manière à ce qu'un élément fixateur (14) de l'organe de maintien déformable (12) vienne en contact avec la paroi externe (3b) de la canalisation (3) et supporte la bride d'adaptation (1).

15. Procédé d'installation d'une bride d'adaptation (1) selon la revendication précédente **caractérisé en ce qu'**il comporte ensuite le placement d'une deuxième pièce externe (8) en contact avec la paroi externe (3b) de la canalisation (3) et la fixation de l'armature (5) avec la deuxième pièce externe (8) au moyen d'un dispositif de serrage (9) liant mécaniquement l'armature (5) avec la deuxième pièce externe (8).

## Patentansprüche

1. Adapterflansch (1) an einem Rohr (3), das mit einer Durchgangsbohrung versehen ist, die einen Durchgangsabschnitt definiert, wobei der Adapterflansch (1) umfasst:
- einen ersten Innenteil (2), umfassend:
• eine Verstärkung (5) aus einem ersten Material und mit einer ersten gekrümmten Fläche (5a), die dazu ausgelegt ist, mit einer Innenwand (3a) des Rohres (3) in mechanischen Kontakt zu treten, einer zweiten Fläche (5b) gegenüber der ersten Fläche (5a) und mindestens einer Seitenwand (5c), die die erste Fläche (5a) mit der zweiten Fläche (5b) verbindet, wobei die Verstärkung (5) eine Verformungszone (6) umfasst, die dazu ausgelegt ist, das Kippen der Verstärkung (5) zwischen einer ersten Position, in der der erste Innenteil (2) einen ersten Abschnitt aufweist, der größer als der Durchgangsabschnitt ist, und einer zweiten Position, in der der erste Innenteil (2) einen ersten Abschnitt aufweist, der kleiner als der Durchgangsabschnitt ist, zu ermöglichen,
• eine Dichtung (4) aus einem zweiten Material, das sich vom ersten Material unterscheidet und zumindest teilweise die erste Fläche (5a) der Verstärkung (5) bedeckt und so angeordnet ist, dass sie mit der Innenwand (3a) des Rohres (3) in Kontakt tritt und die Durchgangsbohrung kontinuierlich umgibt, wobei die Dichtung (4) die Seitenwand (5c) und die zweite Fläche (5b) der Verstärkung (5) kontinuierlich bedeckt, um die Verstärkung (5) von einem in dem Rohr (3) fließenden Abwasser zu separieren,
- Mittel (7) zum Befestigen des ersten Innenteils (2) an der Außenwand (3b) des Rohres (3).

2. Adapterflansch (1) nach Anspruch 1, wobei die Mittel (7) zum Befestigen des ersten Innenteils (2) an der Außenwand (3b) des Rohres (3) einen zweiten Außenteil (8), der dazu ausgelegt ist, mit der Außenwand (3b) des Rohres (3) in Kontakt zu treten, und einen Verbinder, der dazu ausgelegt ist, die Verstärkung (5) mechanisch mit dem zweiten Außenteil (8) zu verbinden, umfassen.

3. Adapterflansch (1) nach einem der Ansprüche 1 und 2, wobei die Verformungszone (6) dazu ausgelegt ist, ein Biegen der Verstärkung (5) zu ermöglichen.

4. Adapterflansch (1) nach dem vorhergehenden Anspruch, wobei die Verformungszone (6) dazu ausgelegt ist, ein Biegen der Verstärkung (5) so zu ermöglichen, dass der Krümmungsradius der ersten Fläche (5a) reduziert wird.

5. Adapterflansch (1) nach dem vorhergehenden Anspruch, wobei die Verstärkung (5) dazu ausgelegt ist, ein Biegen zu verhindern, das den Krümmungsradius der ersten Fläche (5a) vergrößert, wenn sich die Verstärkung (5) in der ersten Position befindet.

6. Adapterflansch (1) nach einem der vorhergehenden Ansprüche, wobei die Dichtung (4) so angeordnet ist, dass sie durch die Durchgangsbohrung hindurchgeht und ein ringförmiges Endstück (10) eines zweiten Rohres definiert.

7. Adapterflansch (1) nach dem vorhergehenden Anspruch, wobei das ringförmige Endstück (10) auf einer Außenseite eine Nut (10a) aufweist, wobei die Nut (10a) dazu ausgelegt ist, mit einem umlaufenden Klemmelement zusammenzuwirken.

8. Adapterflansch (1) nach einem der vorhergehenden Ansprüche, wobei die Verstärkung (5) mindestens ein verformbares Halteelement (12) aufweist, das dazu ausgelegt ist, mit der Außenwand (3b) des Rohres (3) in Kontakt zu treten.

9. Adapterflansch (1) nach einem der vorhergehenden Ansprüche, wobei die Verstärkung (5) mindestens eine Mehrzahl von Stiften oder Löchern (15) aufweist, die gemäß einem Radius der ersten gekrümmten Fläche (5a) angeordnet sind, und wobei die Befestigungsmittel (7, 9) des ersten Innenteils (2) mit der Außenwand (3b) des Rohres (3) ortsfest sind.

10. Adapterflansch (1) nach dem vorhergehenden Anspruch, wobei die Stifte (15) einen rechtwinklig dreieckigen Querschnitt in einer Schnittebene aufweisen, die einen Radius der ersten gekrümmten Fläche (5a) umfasst.

11. Vorrichtung zur Umwälzung von Abwässern, umfassend einen Adapterflansch (1) nach einem der vorhergehenden Ansprüche und ein Rohr (3), das mit einer Durchgangsbohrung versehen ist, wobei der Adapterflansch (1) gegen die Innenwand (3a) des Rohres (3) um die Durchgangsbohrung herum montiert ist.

12. Vorrichtung zur Umwälzung von Abwässern nach dem vorhergehenden Anspruch, wobei es sich bei dem Rohr (3) um ein gewelltes Rohr handelt.

13. Verfahren zum Anbringen eines Adapterflansches (1) an einem mit einer Durchgangsbohrung versehenen Rohr (3), umfassend die folgenden Schritte:
• Bereitstellen einer Durchgangsbohrung an dem Rohr (3),
• Bereitstellen eines Adapterflansches (1) nach einem der Ansprüche 1 bis 10, wobei sich der Adapterflansch (1) in der zweiten Position befindet,
• Einsetzen des Adapterflansches (1) durch die Durchgangsbohrung in das Rohr (3),
• Legen des Adapterflansches (1) gegen die Innenwand (3a) des Rohres (3), sodass die Dichtung (4) die Durchgangsbohrung umgibt, wobei sich der Adapterflansch (1) in der ersten Position befindet,
• Befestigen des Adapterflansches (1) an der Außenwand des Rohres (3).

14. Verfahren zum Anbringen eines Adapterflansches (1) nach dem vorhergehenden Anspruch, wobei mindestens ein verformbares Halteelement (12) an der Verstärkung (5) befestigt ist, **dadurch gekennzeichnet, dass** es einen Schritt zum Verformen des verformbaren Halteelements (12) durch Ziehen umfasst, sodass ein Befestigungselement (14) des verformbaren Halteelements (12) mit der Außenwand (3b) des Rohres (3) in Kontakt tritt und den Adapterflansch (1) trägt.

15. Verfahren zum Anbringen eines Adapterflansches (1) nach dem vorhergehenden Anspruch, **dadurch gekennzeichnet, dass** es anschließend das Anbringen eines zweiten Außenteils (8) in Kontakt mit der Außenwand (3b) des Rohres (3) und das Befestigen der Verstärkung (5) an dem zweiten Außenteil (8) mittels einer Klemmvorrichtung (9) umfasst, die die Verstärkung (5) mit dem zweiten Außenteil (8) mechanisch verbindet.

## Claims

1. Adapter flange (1) for fitting on a pipe (3) provided with a through opening that defines a flow cross-section, the adapter flange (1) comprising:
- a first inner part (2) comprising:
• an armature (5) made from a first material and having a curved first surface (5a) configured to come into mechanical contact with an inner wall (3a) of the pipe (3), a second surface (5b) opposite the first surface (5a) and at least one side wall (5c) joining the first surface (5a) to the second surface (5b), the armature (5) comprising a deformation zone (6) configured to allow movement of the armature (5) between a first position where the first inner part (2) presents a first cross-section larger than the flow cross-section and a second position where the first inner part (2) presents a first cross-section smaller than the flow cross-section,
• a seal (4) made from a second material different from the first material and at least partially covering the first surface (5a) of the armature (5) and arranged to come into contact with the inner wall (3a) of the pipe (3) and to continuously surround the through opening, the seal (4) continuously covering the side wall (5c) and the second surface (5b) of the armature (5) so as to separate the armature (5) from an effluent flowing in the pipe (3),
• fixing means (7) for securing the first inner part (2) with the outer wall (3b) of the pipe (3).

2. Adapter flange (1) according to claim 1, wherein the fixing means (7) securing the first inner part (2) with the outer wall (3b) of the pipe (3) comprise a second outer part (8) configured to come into contact with the outer wall (3b) of the pipe (3) and a connector configured to mechanically connect the armature (5) with the second outer part (8).

3. Adapter flange (1) according to one of claims 1 and 2, wherein the deformation area (6) is configured so as to allow folding of the armature (5).

4. Adapter flange (1) according to the foregoing claim, wherein the deformation area (6) is configured to allow folding of the armature (5) so as to reduce the radius of curvature of the first surface (5a).

5. Adapter flange (1) according to the foregoing claim, wherein the armature (5) is configured to prevent folding increasing the radius of curvature of the first surface (5a) when the armature (5) is in the first position.

6. Adapter flange (1) according to any one of the foregoing claims, wherein the seal (4) is arranged to pass through the through opening and to define an annular end-part (10) of a second pipe.

7. Adapter flange (1) according to the foregoing claim, wherein the annular end-part (10) presents a groove (10a) on an outer surface, the groove (10a) being configured to collaborate with a circumferential clamping means.

8. Adapter flange (1) according to any one of the foregoing claims, wherein the armature (5) has at least one deformable securing means (12) configured to come into contact with the outer wall (3b) of the pipe (3).

9. Adapter flange (1) according to any one of the foregoing claims, wherein the armature (5) has at least a plurality of prongs or openings (15) arranged along a radius of the first curved surface (5a) and wherein the fixing means (7, 9) securing the first inner part (2) to the outer wall (3b) of the pipe (3) have a fixed travel.

10. Adapter flange (1) according to the foregoing claim, wherein the prongs (15) present a cross-section in the form of a right-angled triangle in a cutting plane comprising a radius of the first curved surface (5a).

11. Device for flow of effluents comprising an adapter flange (1) according to any one of the foregoing claims and a pipe (3) provided with a through opening, wherein the adapter flange (1) is fitted against the inner wall (3a) of the pipe (3) around the through opening.

12. Device for flow of effluents according to the foregoing claim wherein the pipe (3) is a creased hose.

13. Method for fitting an adapter flange (1) on a pipe (3) provided with a through opening, comprising the following steps:
• providing the pipe (3) with a through opening,
• providing an adapter flange (1) according to any one of claims 1 to 10, the adapter flange (1) being in the second position,
• inserting the adapter flange (1) in the pipe (3) through the through opening,
• placing the adapter flange (1) against the inner wall (3a) of the pipe (3) so that the seal (4) surrounds the through opening, the adapter flange (1) being in the first position,
• fixing the adapter flange (1) to the outer wall of the pipe (3).

14. Method for fitting an adapter flange (1) according to the foregoing claim, wherein at least one deformable securing means (12) is fixed to the armature (5) and **characterised in that** it comprises a deformation step of the deformable securing means (12) by traction so that a fixing part (14) of the deformable securing means (12) comes into contact with the outer wall (3b) of the pipe (3) and supports the adapter flange (1).

15. Method for fitting an adapter flange (1) according to the foregoing claim, **characterised in that** it subsequently comprises placing of a second outer part (8) in contact with the outer wall (3b) of the pipe (3) and fixing of the armature (5) with the second outer part (8) by means of a clamping device (9) mechanically securing the armature (5) with the second outer part (8).
